**Europäisches Patentamt**

**European Patent Office**

**Office européen des brevets**

(19)

(11) Veröffentlichungsnummer: **0 183 923**
**B1**

(12)

# EUROPÄISCHE PATENTSCHRIFT

(45) Veröffentlichungstag der Patentschrift:
**09.03.88**

(21) Anmeldenummer: **85111003.1**

(22) Anmeldetag: **31.08.85**

(51) Int. Cl.⁴: **H 01 B 3/28**

(54) **Verfahren zur Herstellung von Kabelvergussmassen.**

(30) Priorität: **23.10.84 DE 3438780**

(43) Veröffentlichungstag der Anmeldung:
**11.06.86 Patentblatt 86/24**

(45) Bekanntmachung des Hinweises auf die Patenterteilung:
**09.03.88 Patentblatt 88/10**

(84) Benannte Vertragsstaaten:
**AT BE CH DE FR GB IT LI NL SE**

(56) Entgegenhaltungen:
**DE - A - 2 362 534**
**FR - A - 2 073 619**
**US - A - 4 476 273**

(73) Patentinhaber: **HÜLS AKTIENGESELLSCHAFT,
Patentabteilung / PB 15 - Postfach 13 20,
D-4370 Marl 1 (DE)**

(72) Erfinder: **Gorke, Klaus, Dr., Buchenhöfe 27,
D-4270 Dorsten 11 (DE)**
Erfinder: **Schoppen, Josef, Im Hadkamp 7,
D-4358 Haltern 3 (DE)**

## Beschreibung

Die Erfindung betrifft ein Verfahren zur Herstellung von Kabelvergussmassen entsprechend dem Oberbegriff von Patentanspruch 1.

Kabelvergussmassen sollen ein gutes Eigenschaftsbild aufweisen, das durch die folgende Eigenschaftskombination beschrieben werden kann:

a) sie sollen aus kostengünstigen Mischungskomponenten durch einfaches Mischen erhältlich sein (Wirtschaftlichkeit);

b) sie sollen leicht verarbeitbar sein;

c) sie sollen durch eine hohe elektrische Durchschlagfestigkeit (Durchschlagsspannung, bezogen auf den Elektrodenabstand) und dementsprechend durch ein hohes elektrisches Isolationsvermögen charakterisiert sein (Sicherheit).

Es ist bekannt, Kabelvergussmassen durch Mischen von PVC, anorganischem Füllstoff und Zusatzstoffen herzustellen. Die Massen weisen die Eigenschaften a und b auf. Sie sind jedoch bezüglich Eigenschaft c verbesserungsbedürftig.

Aus der JP-OS 56-109 237 sind Kabelvergussmassen bekannt, welche durch Mischen einer Bindemittelkomponente, eines anorganischen Füllstoffs und von Zusatzstoffen erhalten sind. Die Bindemittelkomponente besteht aus einem flüssigen Polybutadien und anderen Bindemitteln. Auch mit diesen Massen wird die eingangs beschriebene Eigenschaftskombination nur unvollkommen verwirklicht.

Die Aufgabe der Erfindung ist es, ein Verfahren zur Herstellung von Kabelvergussmassen bereitzustellen, mit welchen die beschriebene Eigenschaftskombination wesentlich besser als nach dem Stand der Technik verwirklicht werden kann.

Die Aufgabe wurde in überraschender Weise wie in den Patentansprüchen angegeben gelöst.

In orientierenden Versuchen wurden Massen hergestellt durch einfaches Mischen von flüssigem Polybutadien, feinteiliger Kreide und einer Fettsäure aus der Gruppe Leinölfettsäure, Sojaölfettsäure und Rizinenfettsäure. Die Massen entsprechen den Anforderungen a und b, nicht aber der Anforderung c der eingangs beschriebenen Eigenschaftskombination.

Erst das Verfahren der Erfindung führte zum gewünschten Erfolg.

Das Bindemittel I kann in bekannter Weise durch anionische Polymerisation, insbesondere mit einem lithiumorganischen Katalysator, gegebenenfalls in Gegenwart einer Lewis-Base, insbesondere einer Lewis-Base aus der Gruppe der Ether, tertiären Amine und ihrer Gemische, als Cokatalysator, erhalten werden. Das Bindemittel I hat vorzugsweise einen Gehalt an wiederkehrenden Einheiten, welche durch 1,4-trans-Polymerisation von 1,3-Butadien erhalten sind, von ≤ 50 Massen-% (IR-Analyse). Das Bindemittel I wird vorzugsweise durch Ziegler-Polymerisation, insbesondere mit einem Nickel-Katalysator, erhalten.

Den Copolymerisaten liegen 1,3-Butadien und andere copolymerisierbare 1,3-(Cyclo)diene, wie beispielsweise Isopren und Cyclopentadien, und/oder copolymerisierbare α-Olefine, wie beispielsweise Styrol und Ethylen, zugrunde.

Das Bindemittel II wird in bekannter Weise durch Anlagerung von Maleinsäureanhydrid (MSA) an ein Polymerisat gemäss Merkmal a-1 oder c-1 erhalten (siehe beispielsweise DE-AS 23 62 534).

Die Menge des Bindemittels II ist in der Regel um so grösser je niedriger seine Säurezahl und je grösser die Oberfläche des Füllstoffs ist, d.h. je feinteiliger dieser ist.

Aus Kostengründen werden die Kabelvergussmassen in der Regel so hoch gefüllt, dass noch eine gute Verarbeitbarkeit gewährleistet ist. In diesem Zusammenhang ist es vorteilhaft, einen Füllstoff auszuwählen, dessen Teilchengrössse (Teilchengrössenverteilung) wie folgt durch Siebanalyse charakterisiert ist: 90 Massen-% sind feiner als 4,5 bis 300 μm und < 40 Massen-% sind feiner als 1 μm.

Übliche Zusatzstoffe und beispielsweise flammhemmende Zusätze, rauchhemmende Zusätze, Trocknungsmittel, wie beispielsweise Molekularsieb, und Sikkative, wie beispielsweise Kobaltoctoat.

Die Erfindung wird durch die folgenden Beispiele erläutert. Darin bedeuten Teile (T.) Massenteile und Prozent (%) Massenprozent.

$\overline{M}n$ wurde dampfdruckosmometrisch bestimmt.

Die Viskosität wurde bei 20°C nach DIN 53 015 bestimmt.

Die Säurezahl (SZ) wurde nach DIN 53 402 bestimmt.

Die Durchschlagsspannung wurde nach der folgenden Messvorschrift bestimmt:

Über einen Regeltransformator (Primärseite 0 bis 220 V, Sekundärseite 0 bis 30 kV) wird zwischen zwei Kugelelektroden (Durchmesser 12,5 mm, Abstand 2,0 mm), die in die zu prüfende Masse eingetaucht sind, bei Raumtemperatur eine Prüfwechselspannung (50 Hz) angelegt. Die Spannung wird mit 0 V beginnend langsam und stetig erhöht bis es zum Überschlag kommt.

*Tabelle 1:* Eingesetzte, im Handel erhältliche Polymerisate

| | $\overline{M}n$ | Viskosität [dPa · s] | Mikrostruktur[*] | | |
|---|---|---|---|---|---|
| | | | 1,4-cis | 1,4-trans | Vinyl |
| Polybutadien 1 | ca. 1 500 | 7,5 | ca. 72 | 27 | 1 |
| Polybutadien 2 | ca. 3 000 | 30 | ca. 80 | 19 | 1 |
| Polybutadien 3 | ca. 1 300 | 11 | ca. 10 | 45 | 45 |

| | $\bar{M}n$ | Viskosität [dPa · s] | Mikrostruktur[*] | | |
|---|---|---|---|---|---|
| | | | 1,4-cis | 1,4-trans | Vinyl |
| Polybutadien 4 | ca. 1 150 | 60 | — | — | >85 |
| Polybutadien A | ca. 6 200 | 300 | ca. 85 | 12 | 3 |
| Polybutadien B | ca. 2 600 | 100 | ca. 10 | 45 | 45 |

[*] wiederkehrende Einheiten, die durch 1,4-cis-, 1,4-trans- und 1,2-Polymerisation von 1,3-Butadien erhalten sind und durch IR-Analyse bestimmt wurden.

Die Polybutadiene 1, 2 und A sind durch Ziegler-Polymerisation mit einem Nickel-Katalysator erhalten.

Die Bindemittel I1 bis I4 entsprechen den Polybutadienen 1 bis 4. Die Bindemittel IA und IB entsprechen den Polybutadienen A und B.

Tabelle 2: Bindemittel II, erhalten durch Anlagerung von MSA an Polybutadien 1.

| | angelagertes MSA, bezogen auf Addukt | SZ [mg KOH/g] |
|---|---|---|
| Bindemittel II1.1 | 7,5% | ca. 75 |
| Bindemittel II1.2 | 3 % | ca. 30 |
| Bindemittel II1.C | 0,5% | ca. 5 |

*Herstellung der Kabelvergussmassen*

90 T. des Bindemittels I und 10 T. des Bindemittels II (Tabelle 3) wurden in einem Mischer (Hobart-Mischer, Typ N5D) bei Raumtemperatur gemischt. Portionsweise wurden 300 T. einer handelsüblichen, gemahlenen Kreide (nicht hydrophobiert, d.h. ungecoated; ca. 92% $CaCO_3$ und 1% $MgCO_3$; Siebanalyse: 90 Massen-% sind feiner als 7 µm und 26 Massen-% sind feiner als 1 µm) zugegeben.

Die erhaltenen Massen wurden durch ihr Fliessverhalten beim Ausgiessen aus dem Mischer und durch die Durchschlagsspannung, welche nach der oben angegebenen Messvorschrift bestimmt wurde, charakterisiert (Tabelle 3).

Tabelle 3: Kabelvergussmassen

| Beispiel | Bindemittel-kombination | Fliess-verhalten | Durchschlags-spannung [kV][*] | Bemerkungen |
|---|---|---|---|---|
| 1 | I1-II1.1 | sehr gut | 20 | |
| 2 | I1-II1.2 | gut | 25 | |
| a | I1-II1.C | schlecht | 30 | s. Tab. 2: SZ d. B. II1.C zu niedrig |
| 3 | I2-II1.1 | gut | 19 | |
| b | IA-II1.1 | schlecht | 20 | s. Tab. 1: Visk. d. B. IA zu hoch |
| 4 | I3-II1.1 | sehr gut | 21 | |
| c | IB-II1.1 | schlecht | 20 | s. Tab. 1: Visk. d. B. IB zu hoch |
| 5 | I4-II1.1 | gut | 19 | |

[*] gemessen bei einem Elektrodenabstand von 2,0 mm; die angegebenen Werte sind Mittelwerte aus jeweils drei Einzelwerten

Die Beispiele 1 bis 5 entsprechen der Erfindung. Die Beispiele a bis c sind nicht erfindungsgemässe Vergleichsbeispiele.

**Patentansprüche**

1. Verfahren zur Herstellung von Kabelvergussmassen, welches darin besteht,
— eine Bindemittelkomponente,
— einen anorganischen, in Wasser unlöslichen, pulverförmigen Füllstoff und
— gegebenenfalls übliche Zusatzstoffe, wobei Vulkanisationsmittel ausgeschlossen sind, miteinander zu mischen,
und welches durch die folgenden, zusätzlichen Merkmale gekennzeichnet ist:
a die Bindemittelkomponente ist eine Kombination von zwei Bindemitteln: Sie besteht aus 70 bis 97 Massen-% des Bindemittels I und 3 bis 30 Massen-% des Bindemittels II;
a.1 das Bindemittel I ist ein Homopolymerisat des 1,3-Butadiens oder ein Copolymerisat, dem ≥ 80 Massen-% 1,3-Butadien und ≤ 20 Massen-% andere copolymerisierbare 1,3-(Cyclo)-diene und/oder copolymerisierbare α-Olefine zugrundeliegen (Einbauverhältnis, IR-Analyse); die Polymerisate können durch Isomerisierung oder partielle Cyclisierung modifiziert sein; ihre zahlenmittlere, relative Molekülmasse ($\bar{M}$) ist 500 bis 5000 und ihre Viskosität (DIN 53015, 20°C) 2 bis 80 dPa · s;
a.2 das Bindemittel II ist ein Polymerisat auf Basis von 1,3-Butadien mit seitenständigen Bernsteinsäureanhydridgruppen (maleinisiertes Polymerisat auf Basis von 1,3-Butadien) mit einer Säu-

rezahl von 15 bis 150 [mg KOH/g]; es ist durch Anlagerung von Maleinsäureanhydrid an ein Polymerisat gemäss Merkmal a.1 erhalten;

b der Füllstoff ist ein im wesentlichen (≥ 80 Massen-%) aus einem Erdalkalicarbonat bestehender Stoff, der nicht mit einem hydrophoben Überzug versehen und zur Reaktion mit den Anhydridgruppen des Bindemittels II befähigt ist; seine Menge ist 65 bis 80 Massen-%, bezogen auf die Kabelvergussmasse.

2. Verfahren nach Anspruch 1, welches durch die folgenden Merkmale gekennzeichnet ist:

c die Bindemittelkomponente besteht aus 80 bis 95 Massen-% des Bindemittels I und 5 bis 20 Massen-% des Bindemittels II;

c.1 das Bindemittel I ist ein Homopolymerisat des 1,3-Butadiens; es hat einen Gehalt an wiederkehrenden Einheiten, welche durch 1,4-trans-Polymerisation von 1,3-Butadien erhalten sind, von ≤ 50 Massen-% (IR-Analyse); $\overline{M}$ ist 1000 bis 4000; seine Viskosität ist 6 bis 60 dPa · s;

c.2 das Bindemittel II hat eine Säurezahl von 30 bis 100; es ist durch Anlagerung von Maleinsäureanhydrid an ein Polymerisat erhalten, das wie folgt charakterisiert ist:

Es ist ein Homopolymerisat des 1,3-Butadiens mit einem Gehalt an wiederkehrenden Einheiten, welche durch 1,4-trans-Polymerisation von 1,3-Butadien erhalten sind, von ≤ 50 Massen-%; $\overline{M}n$ ist 1000 bis 3000; seine Viskosität ist 6 bis 40 dPa · s;

d der Füllstoff ist ein natürliches Calcium- oder Calcium/Magnesium-Carbonat; seine Teilchengrösse (Teilchengrössenverteilung), durch Siebanalyse charakterisiert, ist: 90 Massen-% sind feiner als 5 bis 150 μm und < 35 Massen-% sind feiner als 1 μm; seine Menge ist 70 bis 78 Massen-%, bezogen auf die Kabelvergussmasse.

## Claims

1. A process for the production of a cable-embedding composition, which comprises a mixing together a binder component, an inorganic, water-insoluble, pulverulent filler and, if desired, one or more conventional additives, vulcanizing agents being excluded, and which is characterized by the following additional features:

a. the binder component is a combination of two binders, the combination consisting of 70 to 97% by weight of binder I and 3 to 30% by weight of binder II;

a.1. the binder I is a homopolymer of 1,3-butadiene or a copolymer of not less than 80% by weight of 1,4-butadiene and not more than 20% by weight of one or more other copolymerizable 1,3-(cyclo)diene and/or copolymerizable α-olefins (the ratio of the built-in units being determined by infrared analysis); the polymers can be modified by isomerization or partial cyclization; their number-average relative molecular mass ($\overline{M}n$) is 500 to 5,000 and their viscosity (DIN 53 015, 20°C) is 2 to 80 dPa · s;

a.2. the binder II is a polymer based on 1,3-butadiene with lateral succinic anhydride groups (a maleinized polymer based on 1,3-butadiene) having an acid number of 15 to 150 [mg of KOH/g]; it is obtained by addition reaction of maleic anhydride with a polymer according to feature a.1; and

b. the filler is a substance which substantially (to the extent of not less than 80% by weight) consists of an alkaline earth metal carbonate which is not provided with a hydrophobic coating and is capable of reaction with the anhydride groups of binder II; its amount is 65 to 80% by weight, based on the cable-embedding composition.

2. A process according to claim 1, which is characterized by the following features:

c. the binder component consists of 80 to 95% by weight of binder I and 5 to 20% by weight of binder II;

c.1. the binder I is a homopolymer of 1,3-butadiene; it contains not more than 50% by weight (determined by infrared analysis) of recurring units which are obtained by 1,4-trans-polymerization of 1,2-butadiene; its $\overline{M}n$ is 1,000 to 4,000; its viscosity is 6 to 60 dPa · s;

c.2. the binder II has an acid number of 30 to 100; it is obtained by addition reaction of maleic anhydride with a polymer which is characterized as follows:

the polymer is a homopolymer of 1,3-butadiene containing not more than 50% by weight of recurring units which are obtained by 1,4-trans-polymerization of 1,3-butadiene; its $\overline{M}n$ is 1,000 to 3,000; its viscosity is 6 to 40 dPa · s;

d. the filler is a natural calcium carbonate or calcium/magnesium carbonate; its particle size (particle size distribution), characterized by sieve analysis, is:

90% by weight finer than 5 to 150 μm and less than 35% by weight finer than 1 μm; its amount is 70 to 78% by weight, based on the cable-embedding composition.

## Revendications

1. Procédé de fabrication de masse d'isolation pour câbles, ledit procédé, qui consiste à mélanger ensemble:

— un composant de liant,

— une charge pulvérulente minérale, insoluble dans l'eau, et

— éventuellement des additifs usuels, des agents de vulcanisation étant exclus, étant caractérisé par les caractéristiques complémentaires suivantes:

a le composant de liant est une combinaison de deux liants: elle est constituée par 70 à 97% en masse du liant I et par 3 à 10% en masse du liant II;

a.1 le liant I est un produit d'homopolymérisation du 1,3-butadiène ou un produit de copolymérisation renfermant au moins 80% en masse de 1,3-butadiène et au plus 20% en masse d'autres 1,3-(cyclo)diènes copolymérisables et/ou d'alpha-oléfines copolymérisables (proportion d'incorporation; analyse infra-rouge); les produits de polymérisation peuvent être modifiés par isomérisation ou par cyclisation partielle; leur masse moléculaire relative moyenne ($\overline{\text{M}}$n) est de 500 à 5000 et leur viscosité (DIN 53 015, 20°C) de 2 à 80 dPa · s;

a.2 le liant II est un produit de polymérisation à base de 1,3-butadiène avec des groupes anhydride d'acide succinique latéraux avec un indice d'acide de 15 à 150 (mg de KOH par gramme); il est obtenu en additionnant de l'anhydride d'acide maléique à un produit de polymérisation selon la caractéristique a.1;

b la charge est une substance essentiellement formée (80% en masse au moins) d'un carbonate alcalin qui n'est pas pourvu d'un revêtement hydrophobe et est capable de réagir sur les groupes anhydride du liant II; sa quantité est de 65 à 80% en masse, relativement à la masse d'isolation pour câble.

2. Procédé selon la revendication 1, remarquable par les caractéristiques suivantes:

c le composant de liant est constitué par 80 à 95% en masse du liant I et par 5 à 20% en masse du liant II;

c.1 le liant I est un produit d'homopolymérisation du 1,3-butadiène; il présente une teneur d'au plus 50% en masse (analyse infra-rouge) en unités récurrentes obtenues par 1,4-trans-polymérisation de 1,3-butadiène; $\overline{\text{M}}$n a une valeur de 1000 à 4000; sa viscosité est de 6 à 60 dPa · s;

c.2 le liant II a un indice de 30 à 100; il est obtenu par addition d'anhydride d'acide maléique à un produit de polymérisation qui est caractérisé comme suit: c'est un produit d'homopolymérisation du 1,3-butadiène avec une teneur d'au plus 50% en masse en unités récurrentes qui sont obtenues par 1,4-trans-polymérisation de 1,3-butadiène; $\overline{\text{M}}$n a une valeur de 1000 à 3000; sa viscosité est de 6 à 40 dPa · s;

d la charge est un carbonate naturel de calcium ou de calcium et de magnésium; sa grosseur de particules (répartition des tailles de particules), caractérisée par analyse au tamis, est la suivante: 90% en masse sont plus fins que 5 à 150 µm et moins de 35% en masse sont plus fins que 1 µm; sa quantité est de 70 à 78% en masse, relativement à la masse d'isolation pour câbles.